# EUROPEAN PATENT APPLICATION

(11) **EP 0 881 704 A2**
(43) Date of publication of application: **02.12.1998**
(21) Application number: 98109675.3
(22) Date of filing: 27.05.1998
(51) Int. Cl.: H01Q 3/26

(54) **Radio communication apparatus in CDMA communication system with calibration**

(30) Priority: 28.05.1997 JP 155779/97
(71) Applicant: MATSUSHITA ELECTRIC INDUSTRIAL CO., LTD., Kadoma-shi, Osaka 571 (JP)
(72) Inventor: Takakusaki, Keiji, Yokohama-shi, Kanagawa 224 (JP); Miya, Kazuyuki, Kawasaki-shi, Kanagawa 215 (JP); Hiramatsu, Katsuhiko, Yokosuka-shi, Kanagawa 239-0831 (JP)
(74) Representative: Grünecker, Kinkeldey, Stockmair & Schwanhäusser Anwaltssozietät

(57) **Abstract**

In a CDMA radio communication system including a plurality of transmit radio sections, calibration signals with a bandwidth equivalent to that of spread spectrum signals used for communications are generated in base band processing sections. These calibration signals are input to transmit radio sections that convert the spread spectrum base band signals to radio signals. Then, the characteristics of the transmit radio sections are detected from the calibration signals that have passed through the transmit radio sections.

## Description

### BACKGROUND OF THE INVENTION

### Field of the Invention

The present invention relates to digital mobile radio communication systems carrying out radio communications based on the CDMA (Code Division Multiple Access) system, or more specifically radio communication systems that calibrate radio transmit circuits by measuring the characteristics of radio transmit circuits.

### Description of the Related Art

An array antenna system is known as an antenna system made up of a plurality of antennas. The array antenna system can freely set the transmit directivity by adjusting the amplitude and phase of signals sent from each antenna device. The amplitude and phase of the transmit signals can be adjusted at the transmit base band processing sections by multiplying the transmit signals by a complex coefficient.

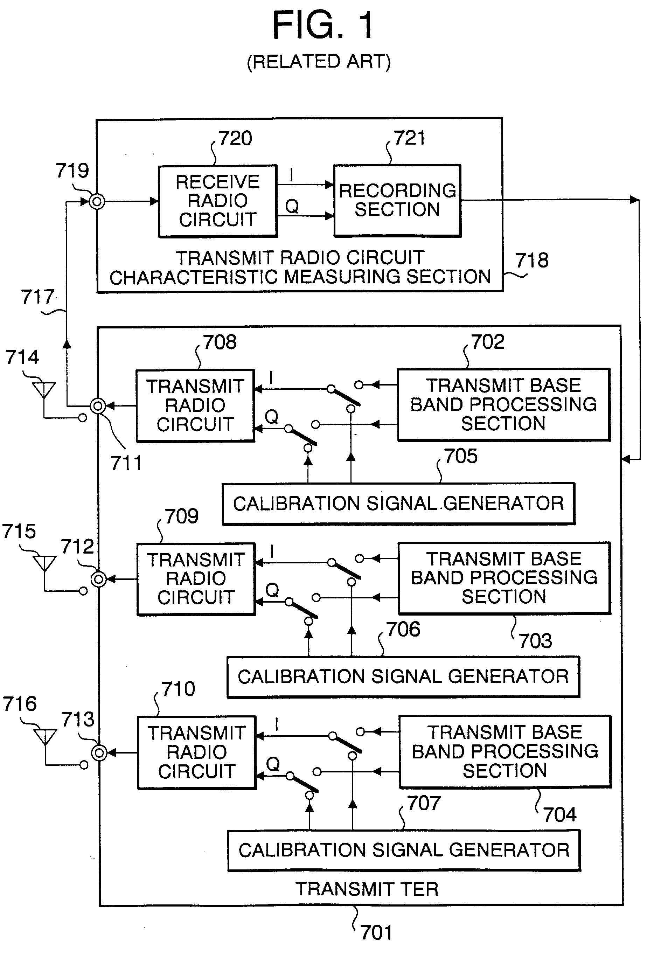

FIG.1 shows a configuration of a CDMA radio communication system equipped with an array antenna that performs radio communications based on the CDMA system. The radio communication system in FIG. 1 shows an example of the array antenna system with three antenna devices.

This communication system comprises transmit section 701, transmit base band processing sections 702, 703 and 704, calibration signal generators 705, 706 and 707, transmit radio circuits 708, 709 and 710, transmit terminals 711, 712 and 713, transmit antennas 714, 715 and 716, cable 717, transmit radio circuit characteristic measuring section 718, receive terminal 719, receive radio circuit 720 and demodulator 721.

The operation of this communication system is described in detail below.

When communicating with other communication systems, the present communication system operates as follows: Radio transmit signals are generated by transmit section 701. Within transmit base band processing sections 702, 703 and 704 in transmit section 701, transmit base band signals are generated by multiplying the information symbol signals to be transmitted by the same spreading code and further multiplying them by individually set complex coefficients. The transmit base band signals generated by transmit base band processing sections 702, 703 and 704 are up-converted to a radio frequency band, amplified and converted to radio transmit signals by transmit radio circuits 708, 709 and 710. The radio transmit signals go through transmit terminals 711, 712 and 713 and are transmitted from transmit antennas 714, 715 and 716. Here, a shared antenna device may be used which serves as a transmit antenna device and receive antenna device simultaneously.

In said transmit base band processing sections 702, 703 and 704, adjusting the multiplication complex coefficients will allow the radiation field intensity to be increased in desired directions only. This is called "providing transmit directivity." Providing transmit directivity will make it possible to keep receive SIR (Signal to Interference Ratio: hereafter referred to as SIR) of other communication systems high.

However, the characteristics of transmit radio circuits 708, 709 and 710 differ from one circuit to another due to variations in the characteristics of devices such as amplifiers. This will add different unknown amplitude variations or phase rotations to the respective antenna transmit signals, forming a transmit directivity different from the transmit directivity expected to be obtained by multiplying a complex coefficient in transmit base band processing sections 702, 703 and 704.

To prevent such a phenomenon, it is necessary to make an adjustment so that transmit radio circuits 708, 709 and 710 have the same characteristics. However, it is extremely difficult to make a precise adjustment of the characteristics of analog devices such as amplifiers. Therefore, instead of adjusting the characteristics of transmit radio circuits 708, 709 and 710, the method used here is to measure and store each of the characteristics of transmit radio circuits 708, 709 and 710 beforehand, and determine the complex coefficients by which transmit signals are multiplied in transmit base band processing sections 702, 703 and 704 taking into account the fact that the amplitude and phase of the transmit signals will change by the differences in their characteristics.

In order to measure the characteristics of transmit radio circuits 708, 709 and 710, a measuring operation is carried out before starting communications. The procedure for measuring the characteristics of the transmit radio circuits is explained below.

Calibration signal generators 705, 706 and 707 generate calibration signals to measure the characteristics of the radio circuits. These generators generate sine wave signals with an extremely slow frequency, called tone signals, or time-invariable signals as the calibration signals. The present system provides either a separate transmit radio circuit characteristic measuring section or a receive section for communications. One of transmit radio circuits 708, 709 and 710 to be subjected to measurement of the transmit radio circuit characteristics is connected to transmit radio circuit characteristic measuring section 718 via cable 717 and the output signal of transmit radio circuit characteristic measuring section 718 is observed. Deviations of the amplitude and phase of the output signal of receive radio circuit 720 from expected values are stored as the differences contained in the characteristics of the transmit radio circuit in recording section 721. Then, connection of transmit radio circuit characteristic measuring section 718 is switched to another transmit radio circuit to be subjected to characteristic measurement and the same processing is performed. The same procedure is repeated to all transmit radio circuits.

When the above characteristic measurements of the transmit radio circuits are completed, transmit antennas 714, 715 and 716 are connected to transmit terminals 711, 712 and 713 and the system enters the communication mode. During communications, transmit base band processing sections 702, 703 and 704 use complex coefficients that are set to offset the recorded characteristic differences of the transmit radio circuits.

However, the conventional radio communication system above uses tone signals as the calibration signals and the frequency bandwidth of those tone signals is very small compared with the frequency bandwidth of spreading signals for communication. This entails a problem that it is not possible to correctly measure the characteristics of transmit radio circuits when actually carrying out communications using spreading signals.

### SUMMARY OF THE INVENTION

In order to solve the above problem, the objective of the present invention is to accurately measure the characteristics of the transmit radio circuits when actually performing communications through spreading signals by using signals having the same bandwidth as that of spreading signals used for communications as the calibration signals.

The present invention provides a CDMA radio communication apparatus that measures the characteristics of transmit radio circuits using calibration signals with a bandwidth equivalent to that of spreading signals used for communications.

The base band processing sections of the CDMA radio communication apparatus can generate calibration signals having a bandwidth equivalent to that of spreading signals used for communications by multiplying respective transmit information symbol signals by different spreading codes.

The calibration signals are passed through the transmit radio circuit sections in which the input signals are converted to radio transmit signals and a plurality of calibration signals output from each transmit radio circuit section are CDMA-multiplexed. The CDMA-multiplexed calibration signals are separately demodulated by different spreading codes.

This configuration allows signals with the same bandwidth as that of spreading signals used for communications to be used as calibration signals, providing accurate measurement of the characteristics of transmit radio circuits.

In addition, this configuration makes it possible to CDMA-multiplex all calibration signals output from the transmit radio circuit sections, input them to the receive radio circuits and demodulator, separate the calibration signals based on the correlation with spreading codes and measure their characteristics independently.

This allow-characteristic measurements of all the transmit radio circuits to be performed simultaneously, which eliminates the necessity of frequently switching cable connections for characteristic measurements. Furthermore, even if no common local oscillator can be used for the transmit radio circuit sections and receive radio circuit sections, this configuration provides accurate measurements of the characteristics of transmit radio section.

### BRIEF DESCRIPTION OF THE DRAWINGS

FIG.1 is a section diagram of a conventional array antenna radio CDMA communication apparatus;
FIG.2 is a section diagram of the CDMA radio communication apparatus related to Embodiment 1 of the present invention;
FIG.3 is a section diagram of the CDMA radio communication apparatus related to Embodiment 2 of the present invention;
FIG.4 is a section diagram of the CDMA radio communication apparatus related to Embodiment 3 of the present invention;
FIG.5 is a section diagram of the CDMA radio communication apparatus related to Embodiment 4 of the present invention;
FIG.6 is a section diagram of the CDMA radio communication apparatus related to Embodiment 5 of the present invention; and
FIG.7 is a section diagram of the CDMA radio communication apparatus related to Embodiment 6 of the present invention.

### DESCRIPTION OF THE PREFERRED EMBODIMENT

With reference now to the attached drawings, the embodiments of the present invention are explained in detail below:

### (Embodiment 1)

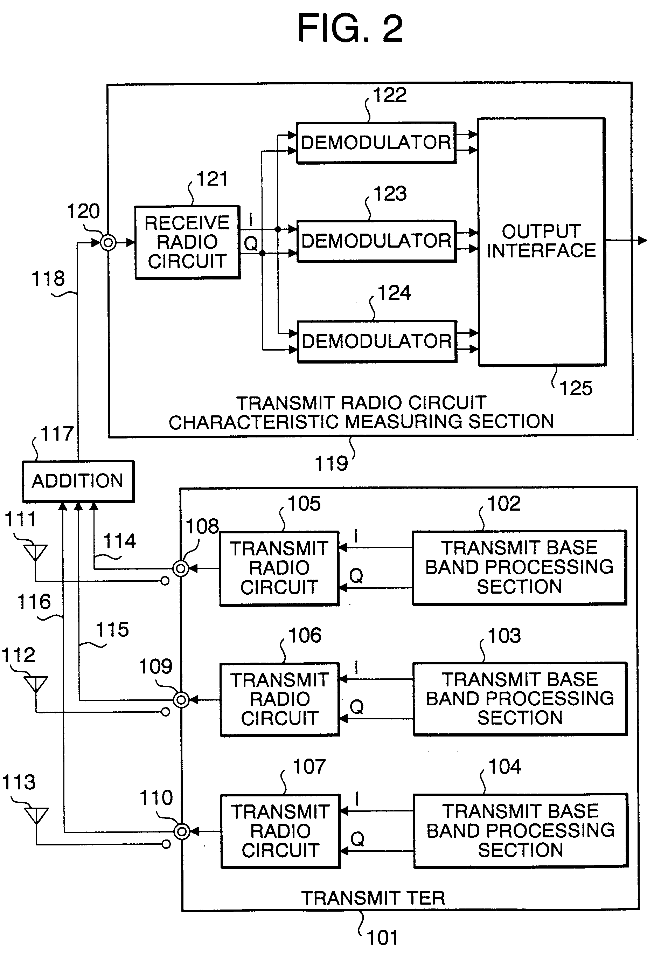

FIG.2 shows a configuration of the CDMA radio communication apparatus related to a first embodiment. This is an example of the CDMA radio communication apparatus equipped with an array antenna comprising three antenna devices 111 to 113.

Transmit section 101 is provided with the transmit base band processing sections (102, 103 and 104) and transmit radio circuits (105, 106 and 107) corresponding to three antenna devices 111 to 113, respectively. At the output ends of transmit radio circuits 105 to 107, transmit terminals 108, 109 and 110 are formed. Three antenna devices 111 to 113 are connected to these transmit terminals 108, 109 and 110.

Cables 114, 115 and 116 can be connected to transmit terminals 108, 109 and 110. When measuring the characteristics of transmit radio circuits, cables 114, 115 and 116 are connected to transmit terminals 108, 109 and 110. Cables 114, 115 and 116 connect transmit terminals 108 to 110 of transmit section 101 with addition section 117. Addition section 117 is connected to transmit radio circuit characteristic measuring section 119 via cable 118.

Characteristic measuring section 119 has receive terminal 120 to which addition section 117 is connected via cable 118. Characteristic measuring section 119 is equipped with receive radio circuit 121, a plurality of demodulators 122, 123 and 124 and output interface 125.

The CDMA radio communication apparatus configured as shown above operates as follows when communicating with other communication systems:

Transmit base band processing sections 102, 103 and 104 in transmit section 101 generate transmit base band signals by multiplying the information symbol signals to be transmitted by the same spreading code and further multiplying them by individually set complex coefficients. The transmit base band signals generated by transmit base band processing sections 102, 103 and 104 are up-converted to a radio frequency band, and amplified and converted to radio transmit signals by transmit radio circuits 105, 106 and 107. The radio transmit signals are transmitted via corresponding transmit terminals 108, 109 and 110 from transmit antennas 111, 112 and 113. Here, a shared antenna device may be used which serves as a transmit antenna device and receive antenna device simultaneously.

In said transmit base band processing sections 102, 103 and 104, adjusting the complex coefficients by which the transmit base band signals are multiplied and controlling the transmit directivity allow receive SIR of other communication stations to be increased.

To carry out adjustments according to variations in the characteristics of transmit radio circuits 105, 106 and 107, the characteristics of transmit radio circuits 105, 106 and 107 are measured before starting communications. Measurement of the characteristics of transmit radio circuits is explained below.

In order to measure the characteristics of transmit radio circuits, all transmit base band processing sections 102, 103 and 104 generate transmit base band signals with known information symbols. Transmit base band processing sections 102, 103 and 104 obtain spread signals by multiplying the known symbol signals by different spreading codes. A plurality of these spread signals (base band signals) are input to corresponding transmit radio circuits 105, 106 and 107. The base band signals that have passed through transmit radio circuits 105, 106 and 107 are converted to transmit radio signals. These transmit radio signals created based on the base band signals are called calibration signals.

Transmit radio circuits 105, 106 and 107 to be subjected to measurement of the characteristics of transmit radio circuits are connected to characteristic measuring section 119 via cables 114, 115 and 116, addition section 117 and cable 118. In this way the calibration signals are supplied from transmit section 101 to characteristic measuring section 119.

Here, it is desirable to adjust cables 114, 115 and 116 so that differences in their lengths be small enough for the lengths of the radio transmit signals. The system made up of these cables 114, 115 and 115, addition section 117 and cable 118 is used to CDMA-multiplex a plurality of calibration signals and is hereafter referred to as a radio transmit signal synthesis section. CDMA multiplexing section multiplexing spread signals in the same frequency band.

In characteristic measuring section 119, the calibration signals that have been CDMA-multiplexed by said radio transmit signal synthesis section are down-converted by receive radio circuit 121 and input to demodulators 122, 123 and 124. Demodulators 122, 123 and 124 separate the CDMA-multiplexed calibration signals and demodulate them separately based on the correlation between the CDMA-multiplexed calibration signals and spreading codes. These three demodulated signals retain the characteristics of their corresponding transmit radio circuits. This characteristic information is independently output from output interface 125. Output interface 125 can output the outputs of said demodulators 122, 123 and 124 as they are or by converting them in a different format. For example, it is totally free to output the outputs of said demodulators; whether in a pair of the I component and Q component in the same format as that of the demodulators, or as a power which is a sum of squares of the I component and Q component, or as an amplitude by finding the square root of them, or as a phase by finding the inverse tangent of the I component and Q component.

The configuration above allows the characteristics of all the transmit radio circuits (105, 106 and 107) to be measured simultaneously, without the need to change cables connections during the measurement. This solves the following problems of the conventional array antenna communication systems unable to perform simultaneous characteristic measurements of a plurality of transmit radio circuits:

Transmit radio circuits 708, 709 and 710 subject to characteristic measurements and receive radio circuit 720 incorporated in transmit radio circuit characteristic measuring section 718 each have a separate local oscillator. When the output phase of these local oscillators changes, the output phase of the radio circuits also changes. Since there are subtle differences in the oscillation frequencies of these local oscillators, the output phase of each local oscillator changes every moment independently. Under such circumstances, even if the characteristics of the radio circuits are constant, the measurement results from transmit radio circuit characteristic measuring section 718 change every moment, which makes the characteristics of the radio circuits appear changing every moment.

Since all transmit radio circuits 708, 709 and 710 in transmit section 701 use local oscillators with the same frequency, it is possible to provide only one local oscillator and share its output with all transmit radio circuits 708, 709 and 710. This makes it possible to keep differences between the output signals of different transmit radio circuits invariable with time. However, the local oscillation frequency in receive radio circuit 720 and the local oscillation frequency in transmit radio circuits 708, 709 and 710 are not always designed to be the same. If the transmit radio circuits and receive radio circuit have different local oscillation frequencies, transmit radio circuits 708, 709 and 710 and receive radio circuit 720 must have separate local oscillators. In this case, due to differences in frequencies in those local oscillators, the measurement results from transmit radio circuit characteristic measuring section 718 change every moment, making the delay characteristic of the radio circuits appear changing every moment. As a result, the characteristics of each transmit radio circuit measured at different times may contain unrecognizable measurement differences, rendering the characteristic measurement meaningless.

Therefore, the present embodiment CDMA-multiplexes all calibration signals output from a plurality of transmit radio circuits 105 to 107 and inputs the resultant signals to transmit radio circuit characteristic measuring section 119, where the calibration signals are separated based on the correlation with spreading codes and their characteristics are measured separately. This allows the characteristics of all transmit radio circuits 105 to 107 to be measured simultaneously. This also eliminates the necessity of frequently changing cable connections for characteristic measurements. Furthermore, even if transmit radio circuits 105 to 107 and receive radio circuit 121 of transmit radio circuit characteristic measurement section 119 cannot use a common local oscillator, it provides accurate measurement of the characteristics of transmit radio circuits 105 to 107.

As shown above, the present embodiment allows signals with the same bandwidth as that of spreading signals used for communications to be used as calibration signals, providing high accuracy measurement of the characteristics of transmit radio circuits. It also eliminates the necessity of frequently changing cable connections for characteristic measurements and furthermore provides more accurate measurements of the characteristics of transmit radio circuits even if no common local oscillators are available for the transmit radio circuits and receive radio circuit in the transmit radio circuit characteristic measuring section.

### (Embodiment 2)

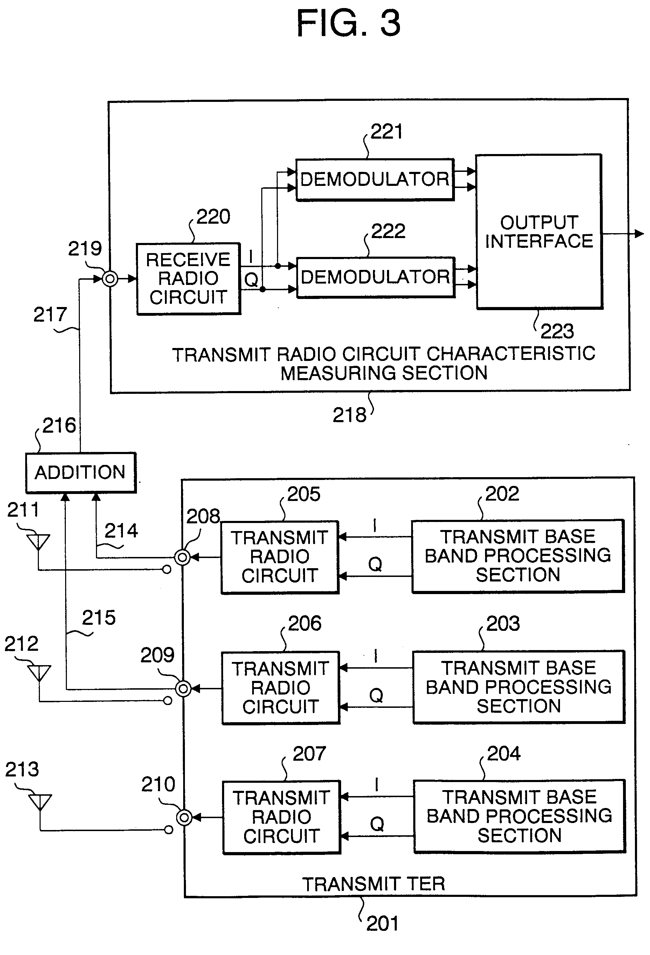

FIG. 3 shows a configuration of the CDMA radio communication system related to a second embodiment of the present invention. Embodiment 2 comprises an array antenna containing three antenna devices, 2 demodulators in the transmit radio circuit characteristic measuring section to measure the amount of delay of the transmit radio circuits.

Transmit section 201 comprises transmit base band processing sections 202, 203 and 204, transmit radio circuits 205, 206 and 207, transmit terminals 208, 209 and 210 and antenna devices 211, 212 and 213.

Two transmit terminals 208 and 209 are connected with addition section 216 via cables 214 and 215 and addition section 216 is further connected with transmit radio circuit characteristic measuring section 218 via cable 217.

Characteristic measuring section 218 is connected to cable 217 through receive terminal 219. Characteristic measuring section 218 is equipped with receive radio circuit 220, demodulators 221 and 222 and output interface 223.

When communicating with other communication systems, the present system operates as follows: Transmit base band processing sections 202, 203 and 204 in transmit section 201 generate transmit base band signals by multiplying the information symbol signals to be transmitted by the same spreading code and further multiplying the spread spectrum transmit signals by individually set complex coefficients. The transmit base band signals generated by transmit base band processing sections 202, 203 and 204 are each up-converted to a radio frequency band, amplified and converted to radio transmit signals by corresponding transmit radio circuits 205, 206 and 207. The radio transmit signals go through transmit terminals 208, 209 and 210 and are transmitted from antenna devices 211, 212 and 213. Here, a shared antenna device may be used which serves as a transmit antenna device and receive antenna device simultaneously.

In said transmit base band processing sections 202, 203 and 204, adjusting the complex coefficients by which the transmit base band signals are multiplied provides the system with transmit directivity, making it possible to keep receive SIR of other communication systems high.

The characteristics of transmit radio circuits 205, 206 and 207 in transmit section 201 are generally measured before starting communications. Measurement of the characteristics of transmit radio circuits is explained below.

In order to measure the characteristics of transmit radio circuits 205 to 207, all transmit base band processing sections 202, 203 and 204 generate transmit base band signals with known information symbols. The radio transmit signals created based on these base band signals are particularly called calibration signals.

The transmit radio circuits to be subjected to measurement of the characteristics of transmit radio circuits are selected from transmit radio circuits 205, 206 and 207 (FIG.3 shows the case where transmit radio circuits 205 and 206 are selected) and transmit terminals 208 and 209 of the selected transmit radio circuits 205 and 206 are connected to addition section 216 via cables 214 and 215, and the output of the addition section is input to receive terminal 219 of characteristic measuring section 218 via cable 217. Here, it is important to adjust cables 214 and 215 so that the difference in their lengths be small enough for the wavelength of the radio transmit signals.

The system made up of these cables 214 and 215, addition section 216 and cable 217 is used to CDMA-multiplex a plurality of calibration signals and is called a radio transmit signal synthesis section.

The procedure for cable connections and measurement is shown below.

First, the outputs of only first transmit radio circuit 205 and second transmit radio circuit 206 are synthesized by the radio transmit signal synthesis section and the resulting output is input to characteristic measuring section 219. In this case, first demodulator 221 demodulates the calibration signal generated by first transmit radio circuit 205 and second demodulator 222 demodulates the calibration signal generated by second transmit radio circuit 206. The differences of the characteristics between first transmit radio circuit 205 and second transmit radio circuit 206 (e.g., phase difference) are calculated based on the two measurement results output from output interface 223.

Then, the outputs of only first transmit radio circuit 205 and third transmit radio circuit 207 are synthesized by the radio transmit signal synthesis section and the resulting output is input to characteristic measuring section 219. In this case, first demodulator 221 demodulates the calibration signal generated by first transmit radio circuit 205 and second demodulator 222 demodulates the calibration signal generated by third transmit radio circuit 207. The differences of the characteristics between first transmit radio circuit 205 and third transmit radio circuit 207 (e.g., phase difference) are calculated based on the two measurement results output from output interface 223.

When carrying out such operations, the characteristics of different transmit radio circuits are measured in a plurality of different time zones, and if different local oscillators are used in the transmit radio circuits and receive radio circuit in the characteristic measuring section, the absolute values of the measured characteristics have no meaning. However, all transmit radio circuits 205 to 207 use a common local oscillator and relative characteristic differences between transmit radio circuits 205 to 207 are fixed, and thus the characteristic differences measured using a one transmit radio circuit (first transmit radio circuit 205 in the example above) as a reference are quite accurate.

Output interface 223 can output the outputs of demodulators 221 and 222 above as they are or by converting them in a different format. For example, it is totally free to output the outputs of said demodulators; whether in a pair of the I component and Q component in the same format as that of the demodulators, or as a power which is a sum of squares of the I component and Q component, or as an amplitude by finding the square root of them, or as a phase by finding the inverse tangent of the I component and Q component.

As shown above, the present embodiment uses less demodulators in the transmit radio circuit characteristic measuring section than the transmit radio circuits and despite the fact that it takes more time and is more troublesome than the system having the same number of demodulators, it can reduce the scale of the system, making it possible to keep the measuring accuracy quite high.

### (Embodiment 3)

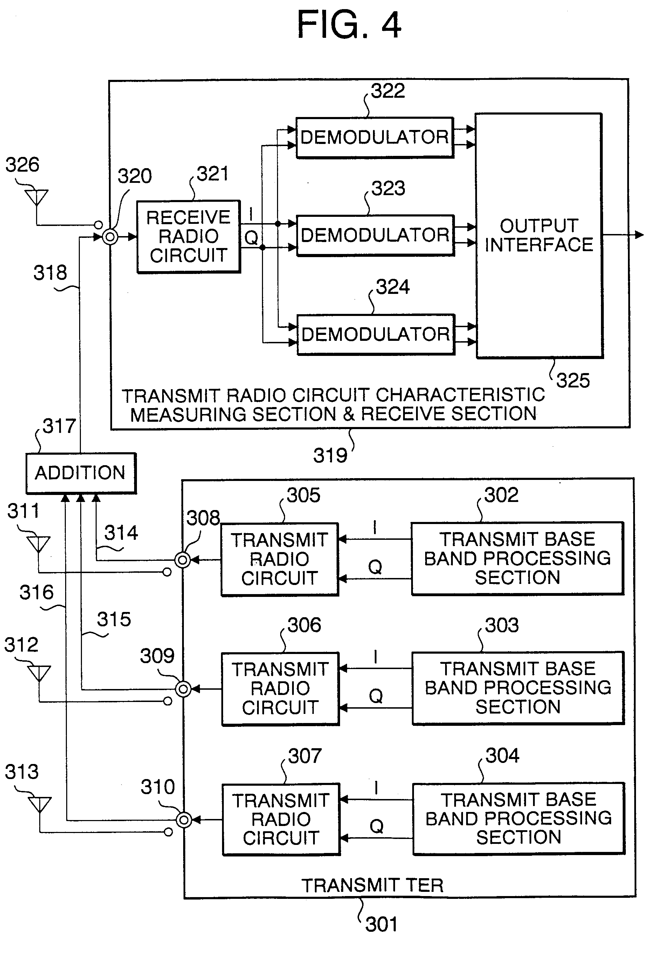

FIG. 4 shows a configuration of the CDMA radio communication system related to a third embodiment of the present invention. Embodiment 3 is an example of the case where the function of the characteristic measuring section in Embodiment 1 above is assumed by the receive section that receives and processes radio signals from other communication systems.

Transmit section 301 of this CDMA radio communication system comprises transmit base band processing sections 302, 303 and 304, transmit radio circuits 305, 306 and 307, transmit terminals 308, 309 and 310 and transmit antennas 311, 312 and 313.

Transmit terminal 308, 309 and 310 are connected with addition section 317 via cables 314, 315 and 316 and addition section 317 is further connected with receive section 319 via cable 318.

Receive section 319 can be used as the transmit radio circuit characteristic measuring section described in Embodiment 1. Receive terminal 320 of this receive section 319 is connected with cable 318 which is connected with addition section 317 and receive antenna 326. When receive section 319 functions as the transmit radio circuit characteristic measuring section, cable 318 is connected with receive terminal 320. Receive section 319 is equipped with receive radio circuit 321, demodulators 322, 323 and 324 and output interface 325.

When communicating with other communication systems, the CDMA radio communication system configured as shown above operates as follows: Transmit base band processing sections 302, 303 and 304 in transmit section 301 generate transmit base band signals by multiplying the information symbol signals to be transmitted by the same spreading code and further multiplying them by individually set complex coefficients. The transmit base band signals generated by transmit base band processing sections 302, 303 and 304 are up-converted to a radio frequency band, amplified and converted to radio transmit signals by transmit radio circuits 305, 306 and 307. The radio transmit signals go through transmit terminals 308, 309 and 310 and are transmitted from antennas 311, 312 and 313.

In said transmit base band processing sections 302, 303 and 304, adjusting the complex coefficients by which the transmit base band signals are multiplied provides the system with transmit directivity, making it possible to keep receive SIR of other communication systems high.

When radio signals transmitted from other communication systems are received, these radio signals are received from receive antenna 326 connected to receive terminal 320 of receive section 319. The signals received are down-converted by receive radio circuit 321 and demodulated by one of demodulators 322, 323 and 324.

Then, the characteristics of transmit radio circuits 305, 306 and 307 in transmit section 301 are measured before starting communications. Measurement of the characteristics of transmit radio circuits is explained below.

In order to measure the characteristics of transmit radio circuits, all transmit base band processing sections 302, 303 and 304 generate transmit base band signals with known information symbols. The radio transmit signals created based on these transmit base band signals are particularly called calibration signals.

Transmit terminals 308 to 310 of transmit section 301 are connected to receive terminal 320 of receive section 319. In this way, transmit radio circuits 305, 306 and 307 subject to measurement of the characteristics of transmit radio circuits are connected to addition section 317 via cables 314, 315 and 316 and the output of the addition section is supplied to receive terminal 320 of transmit radio circuit characteristic measuring section 319 via cable 318. Here, it is important to adjust cables 314, 315 and 316 so that the differences in their lengths be small enough for the wavelength of the radio transmit signals. The system made up of these cables 314, 315 and 316, addition section 317 and cable 318 is used to CDMA-multiplex a plurality of calibration signals and is called a radio transmit signal synthesis section.

In the transmit radio circuit characteristic measuring section (receive section 319), the calibration signals that have been CDMA-multiplexed by said radio transmit signal synthesis section are separated by demodulators 322, 323 and 324 and demodulated separately based on the correlation with spreading codes and output from output interface 325. Output interface 325 can output the outputs of said demodulators 322, 323 and 324 as they are or by converting them in a different format. For example, it is totally free to output the outputs of said demodulators; whether in a pair of the I component and Q component in the same format as that of the demodulators, or as a power which is a sum of squares of the I component and Q component, or as an amplitude by finding the square root of them, or as a phase by finding the inverse tangent of the I component and Q component.

With the configuration as describe above, characteristic measurement of all transmit radio circuits is completed at a time without the necessity of changing cable connections during measurement.

According to the present embodiment as shown above, radio section 319 assumes the function of measuring transmit radio circuit characteristics, allowing radio signals from other communication systems to be received in communication mode, without the need to provide any dedicated transmit radio circuit characteristic measuring section.

It also allows the characteristics of all transmit radio circuits to be measured simultaneously, without the need to change cable connections for characteristic measurements. Furthermore it provides more accurate measurements of the characteristics of transmit radio circuits even if no common local oscillators are available for the transmit radio circuits and receive radio circuit in the transmit radio circuit characteristic measuring section.

### (Embodiment 4)

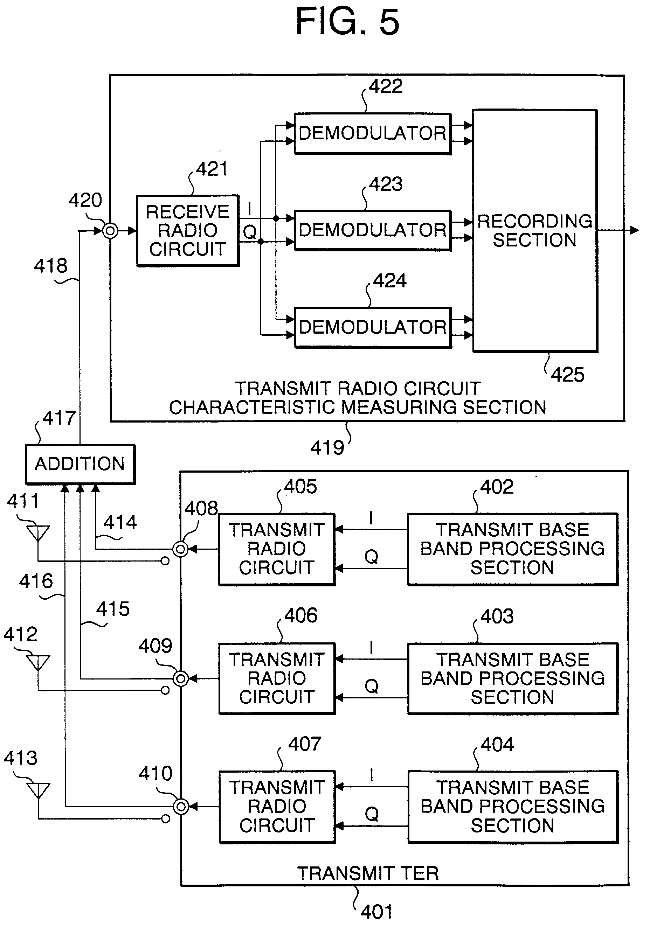

FIG.5 shows a configuration of the CDMA radio communication system related to a fourth embodiment of the present invention. Embodiment 4 is an example of the case of Embodiments 1 to 3 plus a recording section to store the characteristic data of the measured transmit radio circuits.

Transmit section 401 has the same configuration as that of said Embodiment 1. That is, transmit section 401 comprises transmit base band processing sections 402, 403 and 404, transmit radio circuits 405, 406 and 401, transmit terminals 408, 409 and 410 and antenna devices 411, 412 and 413.

Transmit terminals 408, 409 and 410 are connected with addition section 417 via cables 414, 415 and 416, and addition section 417 is further connected with transmit radio circuit characteristic measuring section 419 via cable 418.

Cable 418 is connected to receive terminal 420 of transmit radio circuit characteristic measuring section 419. Characteristic measuring section 419 is equipped with receive radio circuit 421, demodulators 422,423 and 424 and recording section 425.

The CDMA radio communication system of Embodiment 4 consists of the system of either Embodiment 1 or Embodiment 3 plus a recording section to store the measured characteristic data. This recording section can also be configured with memory. The rest of the configuration and operation are the same as those of said embodiments.

The present embodiment allows the characteristic data of the transmit radio circuits that can be measured by the array antenna radio CDMA communication system to be recorded and used for various types of processing.

### (Embodiment 5)

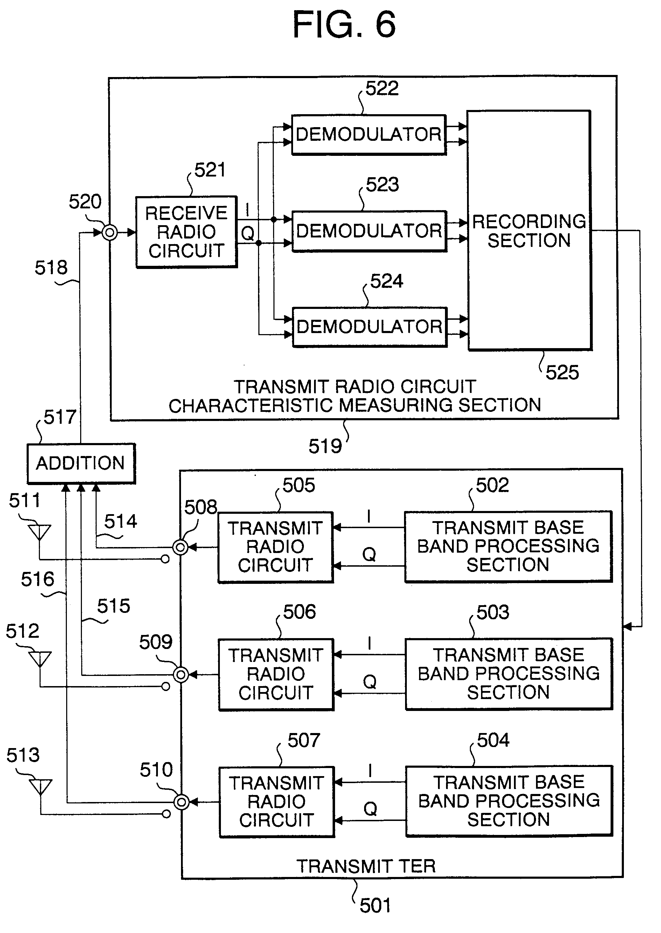

FIG.6 shows a configuration of the CDMA radio communication system related to a fifth embodiment of the present invention. The present embodiment is an example of the case where the characteristic data recorded in the recording section in Embodiment 4 is fed back to the transmit section to be used for directivity control of antennas. The rest of the configuration and operation are the same as those of the CDMA radio communication system in Embodiment 4 described above.

In the same way as in Embodiment 4, the characteristics of all transmit radio circuits 505 to 507 are measured and stored in recording section 525 of characteristic measuring section 519.

The characteristics of transmit radio circuits 505 to 507 stored in recording section 525 of characteristic measuring section 519 is fed back to transmit section 501. Based on the transmit radio circuit characteristic data, transmit section 501 can control processing at transmit base band sections 502, 503 and 504 so as to offset characteristic differences between transmit radio circuits 505, 506 and 507, making it possible to accurately achieve the desired transmit directivity.

### (Embodiment 6)

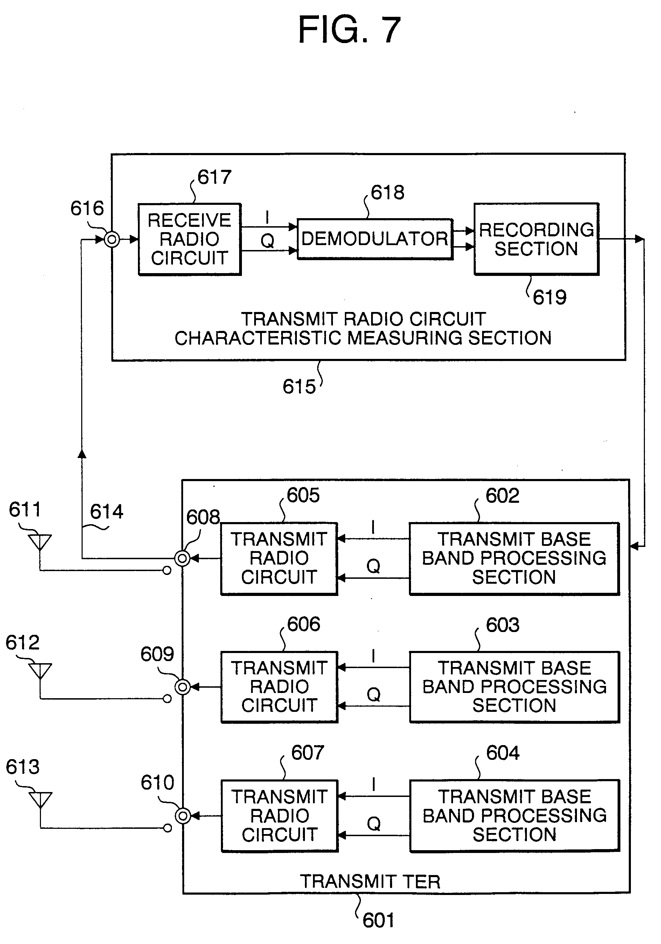

FIG.7 shows a section diagram of the CDMA radio communication system related to a sixth embodiment of the present invention. The present embodiment shows an example of the case where the transmit radio circuits in the transmit section and receive radio circuit in the receive section (or characteristic measuring section) are designed to use common local oscillation frequencies.

Transmit section 601 comprises transmit base band processing sections 602, 603 and 604, transmit radio circuits 605, 606 and 607, transmit terminals 608, 609 and 610, and transmit antennas 611, 612 and 613. Transmit section 601 can be connected with receive section 615 via cable 614.

Transmit radio circuit characteristic measuring section 615 comprises receive terminal 616, receive radio circuit 617, demodulator 618, and recording section 619.

The operation of the present embodiment configured as shown above is explained below. When communicating with other communication systems, transmit base band processing sections 602, 603 and 604 in transmit section 601 generate transmit base band signals by multiplying the information symbol signals to be transmitted by the same spreading code and further multiplying them by individually set complex coefficients. The transmit base band signals generated by transmit base band processing sections 602, 603 and 604 are up-converted to a radio frequency band, amplified and converted to radio transmit signals by transmit radio circuits 605, 606 and 607.

The radio transmit signals go through transmit terminals 608, 609 and 610 and are transmitted from transmit antennas 611, 612 and 613. Here, a shared antenna device may be used which serves as a transmit antenna device and receive antenna device simultaneously.

In said transmit base band processing sections 602, 603 and 604, adjusting the complex coefficients by which the transmit base band signals are multiplied allows the transmission field density to be increased only in a desired direction. Providing the system with transmit directivity makes it possible to keep receive SIR of other communication systems high.

To measure the characteristics of transmit radio circuits 605, 606 and 607, the measuring mode is implemented before starting communications. Measurement of the characteristics of transmit radio circuits is explained below.

In order to measure the characteristics of transmit radio circuits, all transmit base band processing sections 602, 603 and 604 generate transmit base band signals with known information symbols. The radio transmit signals created based on these base band signals are particularly called calibration signals.

In addition, as the transmit radio circuit characteristic measuring section, either a separate transmit radio circuit characteristic measuring section or a communication receive section is provided. One of transmit radio circuits 605, 606 and 607 subject to transmit radio circuit characteristic measurement is connected to the transmit radio circuit characteristic measuring section via cable 614 and the output signal of transmit radio circuit characteristic measuring section 615 is observed. Deviations of the amplitude and phase of the output signal of transmit radio circuit characteristic measuring section 615 from the expected values are recorded as the characteristic differences of the transmit radio circuit. Then, connection of transmit radio circuit characteristic measuring section 615 is switched to another transmit radio circuit subject to characteristic measurement and the same processing is performed. The same procedure is repeated to all transmit radio circuits.

When the above characteristic measurements of transmit radio circuits are completed, transmit antennas 611, 612 and 613 are connected to transmit terminals 608, 609 and 610 and the system enters the communication mode. During communications, transmit base band processing sections 602, 603 and 604 use complex coefficients that are set to offset the recorded characteristic differences of the transmit radio circuits.

If receive radio circuit 617 and transmit radio circuits 605, 606 and 607 are designed to have the same local oscillation frequencies, it is possible to use the same local oscillator for receive radio circuit 617 and transmit radio circuits 605, 606 and 607. In a system configuration having a common local oscillator, it is possible to prevent time variations of the results of transmit radio circuit characteristic measurement arising from oscillation frequency differences between local oscillators.

In such a situation, even if characteristic measurement is performed on a plurality of transmit radio circuits 605, 606 and 607 at different times as described above, the results obtained from such transmit radio circuit characteristic measurement become very accurate. In other words, this eliminates the necessity of providing a radio signal synthesis section or a plurality of demodulators in the transmit radio circuit characteristic measuring section.

As long as a common local oscillator is used for receive radio circuit 617 and transmit radio circuits 605, 606 and 607, the configuration above allows high accuracy measurement of the characteristics of transmit radio circuits without the necessity of providing a plurality of demodulators in the transmit radio circuit characteristic measuring section.

As described above, the present invention allows the use of signals with the same bandwidth as that of spreading signals used for communications as the calibration signals, providing high accuracy measurement of the characteristics of transmit radio circuits.

## Claims

1. A radio communication apparatus, comprising:
array antenna including a plurality of antenna devices(111,112,113);
a plurality of radio transmit sections(105,106,107) for converting a spread spectrum base band signal to a transmit radio signal and outputting the transmit radio signal to the antenna devices(111,112,113);
signal generating means(102,103,104) for generating a calibration signal with a bandwidth equivalent to said spread spectrum base band signal and inputting them to said radio transmit sections(105,106,107);
detecting means(119) for detecting the characteristics of said radio transmit sections(105,106,107) from the calibration signals converted to a radio signal in said radio transmit sections(105,106,107).

2. The radio communication apparatus according to claim 1, further comprising signal synthesizing means for generating a synthetic signal by multiplexing a plurality of calibration signals converted to radio signals that are output from a plurality of said radio transmit sections(205,206,207), and transmitting said synthetic signal to said detecting means(218).

3. The radio communication apparatus according to claim 2, wherein said signal generating means has a plurality of base band processing sections(102,103,104) that generate a calibration signal by spectrum-spreading a known symbol using different spreading codes, said detecting means(119) has a plurality of demodulators(122,123,124) for despreading the synthetic signal transmitted from said signal synthesizing means using said spreading codes to demodulate said calibration signals.

4. The radio communication apparatus according to claim 3, wherein said signal synthesizing means has an adder(117) to which said radio transmit sections(105,106,107) are connected selectively so that at least two calibration signals are simultaneously input from a plurality of said radio transmit sections(105,106,107), said detection means(119) has a number of demodulators(122,123,124) at least equivalent to the number of calibration signals that are simultaneously added by said adder(117).

5. The radio communication apparatus according to claim 3, wherein said detecting means(319) has a receive radio section(321) for down-converting the synthetic signal transmitted from said signal synthesizing means and a plurality of said demodulators(322,323,324) for demodulating the synthetic signal output from this receive radio section(321), said detecting means(319) shares with the receive section(321) for down-converting radio signals received by said antenna devices(326) to demodulates them, said receive radio section(321) and a plurality of said demodulators(322,323,324).

6. The radio communication apparatus according to claim 1, further comprising recording means(425) for recording the characteristic data of said radio transmit sections(405,406,407) detected by said detecting means(419).

7. The radio communication apparatus according to claim 3, wherein the characteristic data of said radio transmit sections(505,506,507) detected by said detecting means(519) is fed back to said base band processing sections(502,503,504) and said transmit base band processing sections(502,503,504) are controlled so as to offset characteristic differences of said radio transmit sections(505,506,507).

8. The radio communication apparatus according to claim 1, wherein said signal generating means has a plurality of base band processing sections(102,103,104) that spectrum-spreads a known symbol using different spreading codes to generate a calibration signal, said detecting means(119) has a single demodulator(122,123,124) that sequentially demodulates the calibration signal converted to a radio signal using the same spreading codes used for the spectrum spreading in said base band processing sections(102,103,104).

9. A method for measuring the characteristics of a plurality of transmit radio sections(105,106,107) installed in a CDMA radio communication system, comprising the steps of:
(a) generating a calibration signal with a bandwidth equivalent to that of spread spectrum signals used for communications;
(b) inputting said calibration signal to transmit radio sections(105,106,107) that convert spread spectrum base band signals to a radio signal;
(c) detecting the characteristics of said transmit radio sections from said calibration signal that have passed through said transmit radio sections(105,106,107).

10. The method according to claim 9, wherein calibration signal for a plurality of said transmit radio sections(105,106,107) are generated by multiplying a known symbol signal by different spreading codes; the calibration signal are simultaneously input to two or more corresponding transmit radio sections(105,106,107), one synthetic signal is generated by multiplexing two or more calibration signals that have passed through said transmit radio sections(105,106,107), two or more calibration signals multiplexed above are demodulated by multiplying said synthetic signal by said spreading codes in parallel.
